# FASCICULE DE BREVET EUROPEEN

(11) **EP 1 076 235 B1**
(45) Date de publication et mention de la délivrance du brevet: **02.11.2005**
(21) Numéro de dépôt: 00115998.7
(22) Date de dépôt: 26.07.2000
(51) Int. Cl.: G01N 19/02, B60C 11/01, B60C 11/13, B60C 11/18, B60T 8/00, G01M 17/02

(54) **Mesures d' adhérence entre une roue de véhicule et la chaussée**
Haftreibungsmessungen zwischen einem Fahrzeugrad und einer Fahrbahn
Measuring adhesive friction between roadway and vehicle tyres

(30) Priorité: 10.08.1999 FR 9910422; 31.12.1999 FR 9916835
(43) Date de publication de la demande: 14.02.2001
(73) Titulaire: Société de Technologie Michelin, 63000 Clermont-Ferrand Cedex 09 (FR); MICHELIN RECHERCHE ET TECHNIQUE S.A., 1763 Granges-Paccot (CH)
(72) Inventeur: Travert, Pierrick, 63110 Beaumont (FR)
(74) Mandataire: Bauvir, Jacques

(56) Documents cités:
- EP-A- 0 787 602
- EP-A- 0 841 550
- EP-A- 0 937 615
- EP-A- 0 989 394
- DE-A- 3 937 966
- DE-A- 3 939 917
- US-A- 4 480 671
- US-A- 5 864 056
- US-A- 5 913 240

## Description

La présente invention se rapporte à l'adhérence d'un véhicule sur une chaussée. Elle concerne plus particulièrement la détermination de caractéristiques d'adhérence entre une roue de véhicule, équipée d'un bandage élastique tel qu'un pneumatique en roulage sur le sol, à partir de l'obtention de paramètres physiques dans l'aire de contact entre cette roue et la surface de roulement. Le document DE 39 39 917 A illustre une bande de roulement équipée de capteurs.

Il existe à cet égard un besoin pour obtenir des indications "en temps réel" des conditions d'adhérence susceptibles d'affecter le comportement d'un véhicule, notamment dans le cas où il subit une accélération par effort moteur ou freineur ou par changement de trajectoire. L'invention vise à fournir une méthode et des moyens d'y parvenir de manière efficace.

Dans ce qui suit, on entend par "potentiel d'adhérence d'un élément donné" (cet élément pouvant être un pain de gomme, une nervure d'un pneumatique ou le pneumatique complet), le rapport entre l'effort tangentiel maximal que cet élément peut subir au cours de son contact avec le sol, en un lieu donné, et l'effort normal appliqué à cet élément. Nous désignons par "potentiel de frottement" le rapport entre la contrainte tangentielle et la contrainte verticale qui s'exercent en un point donné sur un élément de gomme en glissement sur le sol.

Nous appellerons "marge d'adhérence disponible" la différence entre le potentiel d'adhérence d'un élément et le rapport entre l'effort tangentiel et l'effort vertical effectivement appliqués à cet élément lors de son passage dans l'aire de contact.

L'invention a pour objet un pneumatique adapté à l'estimation du potentiel d'adhérence ou de la marge d'adhérence, dont la bande de roulement comporte un premier élément de la bande de roulement ayant une surface de contact avec le sol positionnée à une distance de axe de roue plus faible que celle d'au moins un deuxième élément, lesdits éléments étant tels que, en fonctionnement normal, les surfaces des deux éléments entrent en contact avec le sol dans l'aire de contact et étant tels que, dans au moins une plage de conditions de roulement à surveiller, la différence entre les distances puisse s'auto-entretenir au cours de l'usure du pneu en service normal, de sorte que, en fonctionnement normal, la surface de contact du premier élément subisse un glissement par rapport au sol au cours de son passage dans l'aire de contact alors que la surface de contact du deuxième élément ne glisse pas sur le sol, ledit pneumatique comportant des moyens formant capteur à l'intérieur dudit premier élément, les moyens formant capteur étant capables de mesurer les déformations ou les contraintes au moins dans le sens tangentiel dans ladite surface de contact dudit premier élément au cours de son passage dans l'aire de contact.

L'invention propose donc d'adapter une partie de la bande de roulement afin de lui faire dépasser la limite d'adhérence et de procéder à au moins une mesure appropriée dans cette partie. On peut intégrer des capteurs dans la bande de roulement comme précisé ci-dessus. Mais on peut également procéder à la ou aux mesures appropriées sans nécessairement intégrer des capteurs dans la bande de roulement du pneumatique.

L'invention propose également une méthode de détection d'une caractéristique d'adhérence entre une roue possédant une bande de roulement déformable et un sol de roulement, comprenant les étapes suivantes :
a) Prévoir au moins un premier élément de contact de la bande de roulement ayant une surface de contact avec le sol positionnée à une distance de l'axe de roue plus faible que la distance d'une surface de contact d'au moins un deuxième élément avec le sol, l'écart entre lesdites surfaces de contact étant tel qu'en fonctionnement normal les surfaces des deux éléments entrent en contact toutes deux avec le sol et que, dans au moins une plage de conditions de roulement à surveiller, la surface de contact du premier élément subisse un glissement par rapport au sol au cours de son passage dans l'aire de contact ;
b) Produire un premier signal, représentatif d'un effort tangentiel dans ladite surface de contact de l'élément le plus proche de l'axe ;
c) Détecter une variation dudit premier signal, caractéristique d'une perte d'adhérence ;
d) Produire une estimation du potentiel de frottement dans ladite surface de contact dudit premier élément ;
e) Produire une estimation du potentiel d'adhérence du pneumatique.

L'invention permet bien entendu d'estimer la "marge d'adhérence disponible" par la différence entre le potentiel d'adhérence du pneumatique et le rapport entre les efforts, tangentiel et vertical, effectivement appliqués au pneumatique, si l'on dispose d'une évaluation desdits efforts tangentiel et vertical. Par exemple, on peut estimer l'effort tangentiel dans le sens longitudinal, ainsi que l'effort vertical au moyen de ce qui est décrit dans le brevet US 5,913,240. Mais on peut aussi estimer l'effort tangentiel et l'effort vertical à partir de mesures toutes faites dans la bande de roulement. D'autres détails seront donnés à ce sujet dans la suite.

Sous un autre aspect, l'invention propose d'estimer la "marge d'adhérence disponible" sans passer par une mesure ou une estimation des efforts, vertical et tangentiel, effectivement appliqués au pneumatique. Pour cela, l'invention propose une méthode de détection d'une caractéristique d'adhérence entre une roue possédant une bande de roulement déformable et un sol de roulement, comprenant les étapes suivantes :
a) Prévoir au moins un premier élément de contact de la bande de roulement ayant une surface de contact avec le sol positionnée à une distance de l'axe de roue plus faible que la distance d'une surface de contact d'au moins un deuxième élément (2) avec le sol, l'écart entre lesdites surfaces de contact étant tel qu'en fonctionnement normal les surfaces des deux éléments entrent en contact toutes deux avec le sol ;
b) Produire un premier signal représentatif d'un effort tangentiel dans une zone de la surface de contact dudit premier élément ;
c) Détecter sur ledit premier signal l'instant d'entrée dans l'aire de contact dudit premier élément ;
d) Détecter sur ledit premier signal l'instant où le premier signal subit une variation caractéristique d'une perte d'adhérence ; et
e) Produire une indication caractéristique d'une marge d'adhérence disponible à partir d'une fonction du premier signal entre l'instant de détection de l'entrée dans l'aire de contact et l'instant de détection de ladite variation caractéristique.

L'invention est illustrée par les figures suivantes :
- la figure 1 est une coupe radiale d'un pneumatique utilisable avec la méthode selon l'invention,
- la figure 2 schématise le fonctionnement d'un pneumatique,
- la figure 3 est un tableau diagramme des observations typiques de la méthode de l'invention dans un cas idéalisé,
- la figure 4 montre des observations proposées par l'invention,
- la figure 5 montre d'autres observations proposées par l'invention.
- la figure 6 montre d'autres observations encore proposées par l'invention.

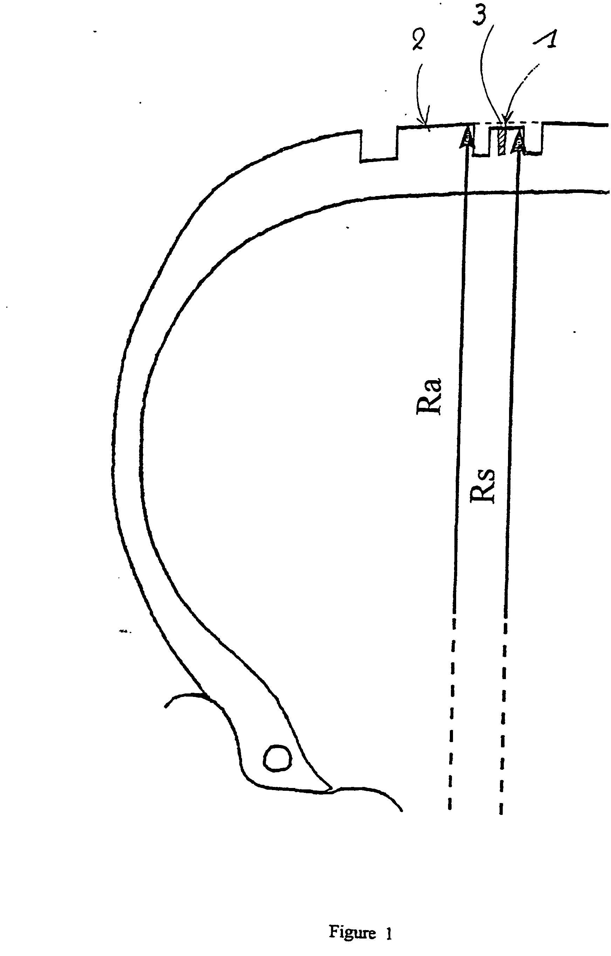

Le pneumatique selon l'invention comporte, soit une ou plusieurs nervures 1 complètes, soit un ou plusieurs pains de sculpture, dont la circonférence extérieure a un rayon Rs inférieur au rayon Ra de la circonférence des nervures 2 ordinaires ou des pains ordinaires adjacents (voir fig. 1).

Une telle nervure 1 ou un tel pain seront appelés respectivement " nervure sacrifiée " ou " pain sacrifié " ou « premier élément » dans la suite du document. Le brevet US 4,480,671 montre une telle nervure sacrifiée [voir nervure latérale 8]. Par contraste, tout autre partie de la sculpture du pneumatique sera désignée par « nervure 2 ordinaire » ou « pain ordinaire » ou « deuxième élément ». L'homme du métier sait que la différence entre Ra et Rs peut s'auto-entretenir au cours de l'usure du pneu en service normal. Un avantage de l'invention est de pouvoir ainsi appréhender la marge d'adhérence disponible jusqu'à usure totale du pneu, grâce à une mesure du potentiel de frottement faite sur une nervure sacrifiée.

Le pneumatique ainsi adapté va permettre d'estimer le "potentiel d'adhérence", notion définie ci-dessus et utilisée essentiellement en liaison avec l'ensemble de la bande de roulement. Le pneumatique ainsi adapté peut aussi permettre d'estimer le "potentiel de frottement", notion définie ci-dessus et utilisée en liaison avec la nervure ou le pain sacrifié.

En fonctionnement normal, la nervure sacrifiée 1 glisse sur le sol alors que la nervure ordinaire 2 ne glisse pas sur le sol. On effectue une mesure du potentiel d'adhérence maximal sur le sol, à tout instant, grâce à la nervure sacrifiée 1.

A l'intérieur de chaque nervure sacrifiée, ou de chaque pain sacrifié, un ou plusieurs capteurs 3 permettent de mesurer les déformations ou les contraintes que subit cette nervure ou ce pain au cours du roulage du pneu, dans les directions longitudinale et transversale ; la mesure des contraintes ou des déformations peut également être effectuée dans la direction verticale, ce qui améliore la performance du système.

Avec un capteur 3 approprié, on peut obtenir ces mesures pendant toute la durée de vie du pneu. Il est bien entendu souhaitable que la partie de la bande de roulement du pneumatique spécifique pour la mesure soit aussi peu importante que possible, ou plus fondamentalement que cette partie ne dégrade pas les performances du pneumatique. C'est pourquoi il peut être intéressant de la limiter à un ou un petit nombre de pains de caoutchouc, ou de la limiter à une nervure circonférentielle aussi étroite que possible. On peut obtenir l'information souhaitée en faisant une seule mesure par tour du pneumatique. Quant au véhicule, il semble superflu que tous ses pneumatiques soient concernés par de telles mesures, un pneumatique par côté semblant amplement suffisant.

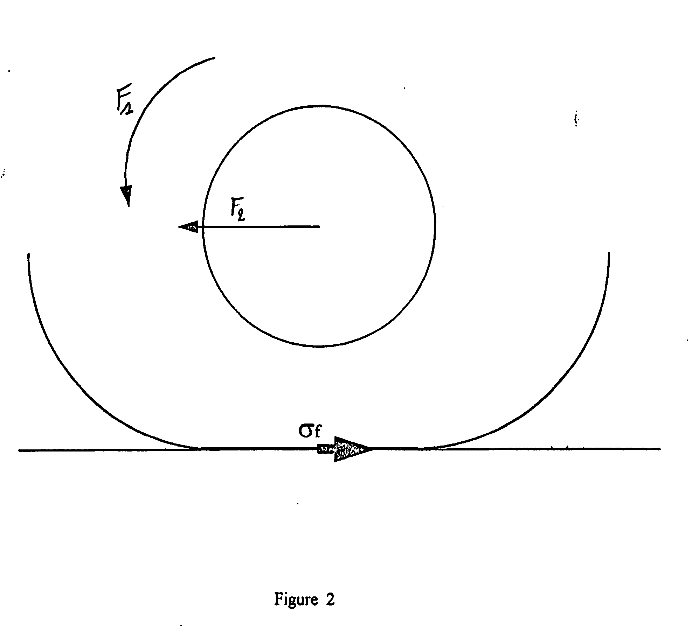

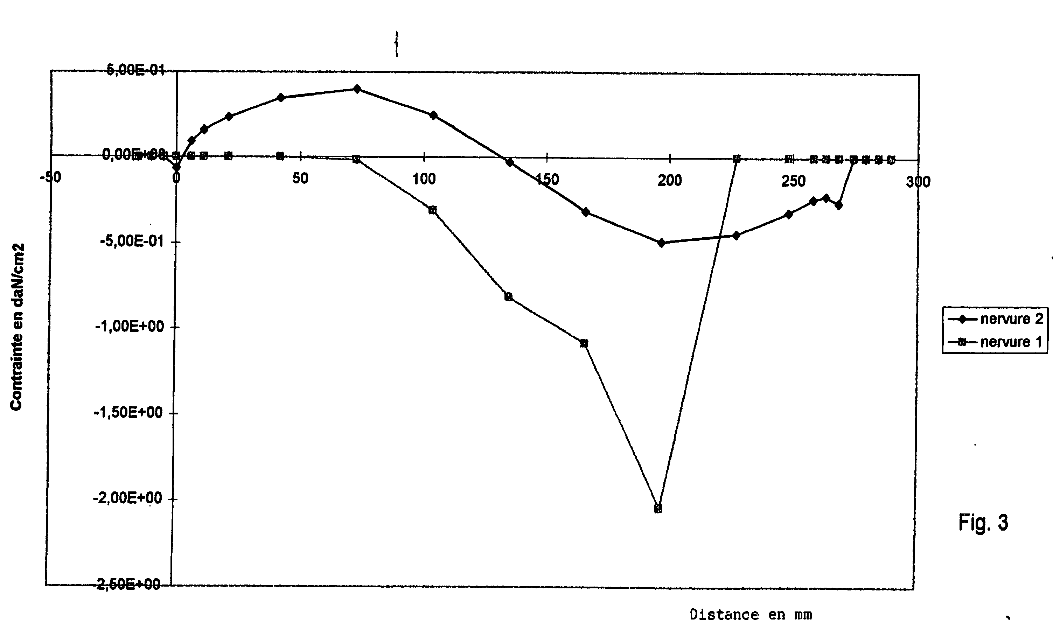

Lors d'un roulage libre (i.e. sans couple moteur ni freineur, F₁ représentant le sens de rotation et F₂ le sens de déplacement) et en ligne droite du pneumatique sur une chaussée, lorsqu'un point à la surface d'une nervure sacrifiée vient en contact avec la chaussée, une contrainte de cisaillement freineuse σ_{f} se développe à l'interface entre la nervure sacrifiée et la chaussée (fig. 2) ; elle s'ajoute à la contrainte en forme de sinus qui s'applique normalement sur toute nervure et dont un exemple de représentation est donné par la courbe relative à la nervure 2 sur la figure 3 ; la contrainte résultante sur la nervure sacrifiée prend la forme de la courbe relative à la nervure 1 sur la figure 3 ; cette contrainte augmente depuis l'instant du début du contact jusqu'à celui où la contrainte de cisaillement atteint la valeur maximale permise par le potentiel de frottement de la gomme sur le sol.

La figure 3 présente le cas théorique d'un potentiel de frottement infini ou très grand. Elle montre les contraintes de cisaillement longitudinales (en daN/cm2) sur une nervure sacrifiée et sur une nervure normale adjacente à la nervure sacrifiée, dans l'aire de contact, en fonction de la distance « D » (en mm) entre le bord de l'aire de contact et le point considéré. Dans ce cas, la contrainte de cisaillement croît, en valeur absolue, jusqu'à l'instant où le point quitte le contact avec la chaussée.

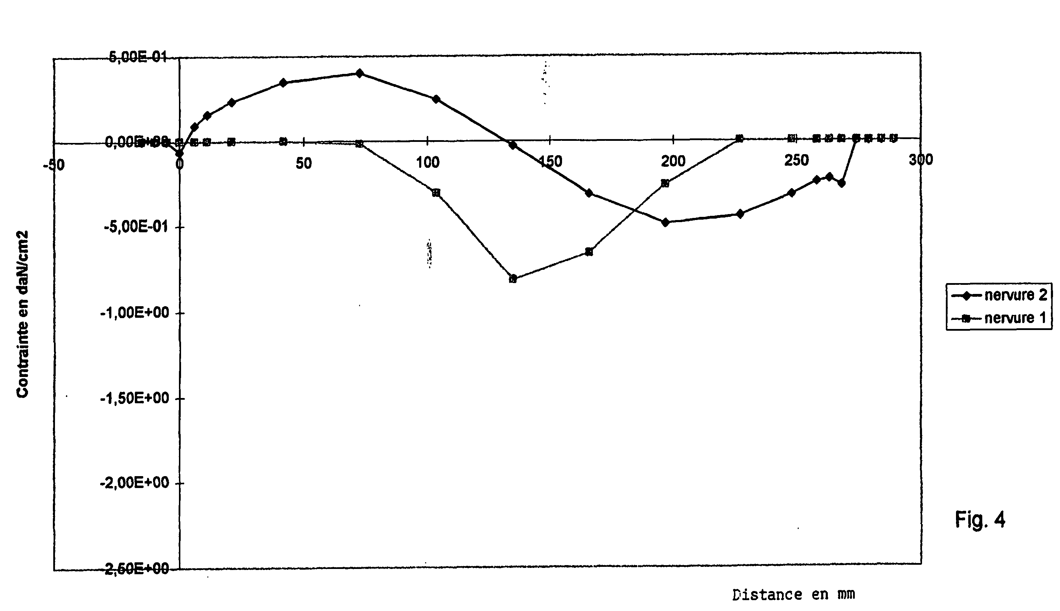

Si le potentiel de frottement n'est pas infini, ce qui est le cas dans la réalité, le point en question glisse à la surface de la chaussée dès que la contrainte de cisaillement atteint la valeur maximale permise par le potentiel de frottement. La figure 4 montre, pour un cas plus réaliste où le potentiel de frottement est égal à 0.5, les contraintes de cisaillement longitudinales (en daN/cm2) sur une nervure sacrifiée et sur une nervure normale adjacente à la nervure sacrifiée, dans l'aire de contact, en fonction de la distance « D » (en mm) entre le bord de l'aire de contact et le point considéré. Le signal représentant la contrainte de cisaillement en fonction de la distance parcourue par le centre de la roue est différent de celui représenté sur la figure 3. La forme du signal, et notamment la valeur maximale de celui-ci, sont en relation directe avec le potentiel de frottement.

Si ce potentiel évolue, la partie initiale du signal de contrainte représenté en fonction de la distance parcourue (égale à la vitesse multipliée par le temps écoulé depuis l'instant du début de contact entre le point et le sol) change peu ; par contre la partie finale du signal est modifiée en relation avec le niveau du potentiel. Ainsi, l'analyse du signal de la contrainte de cisaillement exercée sur la nervure sacrifiée fournit une information sur le potentiel de frottement entre la nervure et la chaussée, qui est lui-même directement corrélé au potentiel d'adhérence du pneumatique sur la chaussée.

A partir d'une relation préétablie pour relier le potentiel de frottement de la nervure et le potentiel d'adhérence du pneumatique, d'une part, et d'une procédure de réétalonnage régulier utilisant par exemple la propriété selon laquelle le potentiel d'adhérence maximum du pneumatique sur toutes les conditions de chaussée confondues évolue peu, il est possible de déduire la valeur du potentiel d'adhérence du pneumatique de la valeur de la contrainte de cisaillement exercée sur la nervure sacrifiée ou de tout signal représentatif de cette contrainte de cisaillement. Cette procédure de réétalonnage est nécessaire car la pression sous la nervure sacrifiée peut évoluer au cours de l'usage du pneumatique, par exemple en fonction de l'usure du pneumatique, pour des conditions identiques de charge du pneumatique et de pression de gonflage et cette évolution de la pression introduit une variable qui modifie la relation entre la contrainte de cisaillement exercée sur la nervure et le potentiel d'adhérence du pneumatique.

Si la nervure sacrifiée est de surcroît équipée d'une mesure de la contrainte verticale au même point, il est possible de calculer le coefficient de frottement entre la nervure et le sol en effectuant le rapport entre la contrainte de cisaillement et la contrainte verticale. Dans ce cas, il n'est même plus utile de procéder à un réétalonnage régulier pour évaluer le potentiel d'adhérence du pneumatique.

Dès lors, dans une variante avantageuse de la méthode de détection, les étapes visant à détecter une variation dudit premier signal et à produire une estimation du potentiel d'adhérence dans ladite surface de contact du pneumatique comprennent les opérations suivantes :
a) Produire un deuxième signal, représentatif d'un effort vertical dans ladite surface de contact dudit premier élément ;
b) Produire à partir des premier et deuxième signaux un troisième signal, représentatif du rapport entre l'effort tangentiel et l'effort vertical ;
c) Détecter une variation dudit troisième signal caractéristique d'une perte d'adhérence ;
d) Produire une estimation du potentiel de frottement dans ladite surface de contact du premier élément ; et
e) A partir du potentiel de frottement, produire une estimation du potentiel d'adhérence dans ladite surface de contact du pneumatique.

La contrainte freineuse, qui se développe dans le contact, résulte de la différence des longueurs des circonférences extérieures de la nervure sacrifiée et des nervures adjacentes. Ainsi, en modifiant cette différence de longueurs, on modifie la rapidité de la croissance de la contrainte entre les instants d'entrée en contact et de sortie du contact : plus la différence de longueurs est grande, et plus la contrainte de cisaillement augmente rapidement.

Si le pneumatique roule avec un angle de dérive, une contrainte transversale se développe à l'interface entre la nervure sacrifiée et la chaussée. Celle-ci s'ajoute vectoriellement à la contrainte longitudinale. La résultante subit alors la même évolution que celle décrite précédemment, à savoir que son module augmente entre l'instant où s'établit le contact et celui où sa valeur atteint la contrainte maximale permise par le potentiel de frottement, pour autant que la différence entre les longueurs des circonférences de la nervure sacrifiée et des nervures adjacentes ait un niveau suffisant.

Dans une autre application avantageuse de la méthode, on procède en outre aux étapes suivantes :
a) Produire un premier signal de bande de roulement fonctionnelle, représentatif d'un effort tangentiel dans une zone de la surface de contact dudit au moins un deuxième élément ;
b) Produire un deuxième signal de bande de roulement fonctionnelle, représentatif d'un effort vertical dans une zone de la surface de contact dudit au moins un deuxième élément ;
c) Produire une indication caractéristique de l'effort tangentiel appliqué au pneumatique, à partir de l'intégration dudit premier signal de bande de roulement fonctionnelle, entre les instants de début et de fin de contact avec le sol de ladite zone, sur la largeur du pneumatique ;
d) Produire une indication caractéristique de l'effort vertical appliqué au pneumatique, à partir de l'intégration dudit deuxième signal de bande de roulement fonctionnelle, entre les instants de début et de fin de contact avec le sol de ladite zone, sur la largeur du pneumatique ;
e) Déterminer la "marge d'adhérence disponible" par la différence entre le potentiel d'adhérence du pneumatique et le rapport entre lesdits effort tangentiel et effort vertical appliqués au pneumatique.

Cette façon d'estimer la "marge d'adhérence disponible" impose d'estimer l'effort vertical et l'effort tangentiel dans les éléments de la bande de roulement. On exposera dans la suite une autre méthode qui dispense de cette connaissance ou de cette estimation.

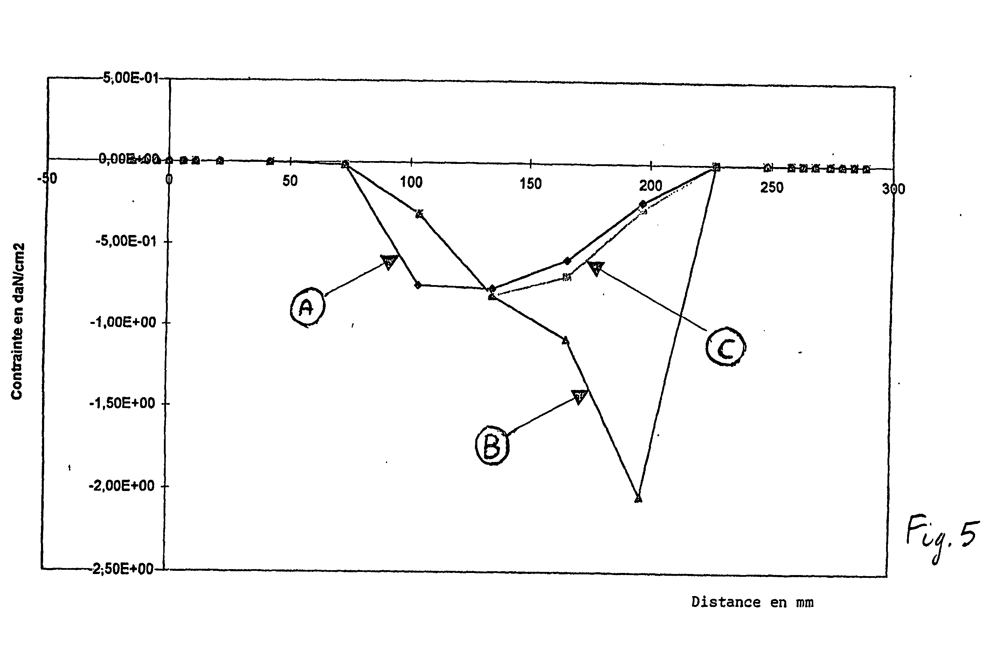

La figure 5 montre les contraintes de cisaillement longitudinales (en daN/cm2) sur une nervure sacrifiée, dans l'aire de contact, en fonction de la distance « D » (en mm) entre le bord de l'aire de contact et le point considéré, dans le cas du roulage avec un couple freineur et un potentiel de frottement valant 0.5 (courbe A), dans le cas du roulage libre et un potentiel de frottement infini (courbe B), et dans le cas du roulage libre et un potentiel de frottement valant 0.5 (courbe C). Si un couple moteur ou freineur est exercé sur le pneumatique, une contrainte longitudinale vient s'ajouter ou se retrancher à la contrainte induite par la différence des longueurs des circonférences des nervures. Par exemple, dans le cas d'un couple freineur, le signal de contrainte croît plus rapidement, en fonction de la distance parcourue, que dans le cas où la roue fonctionne à couple nul (fig. 5).

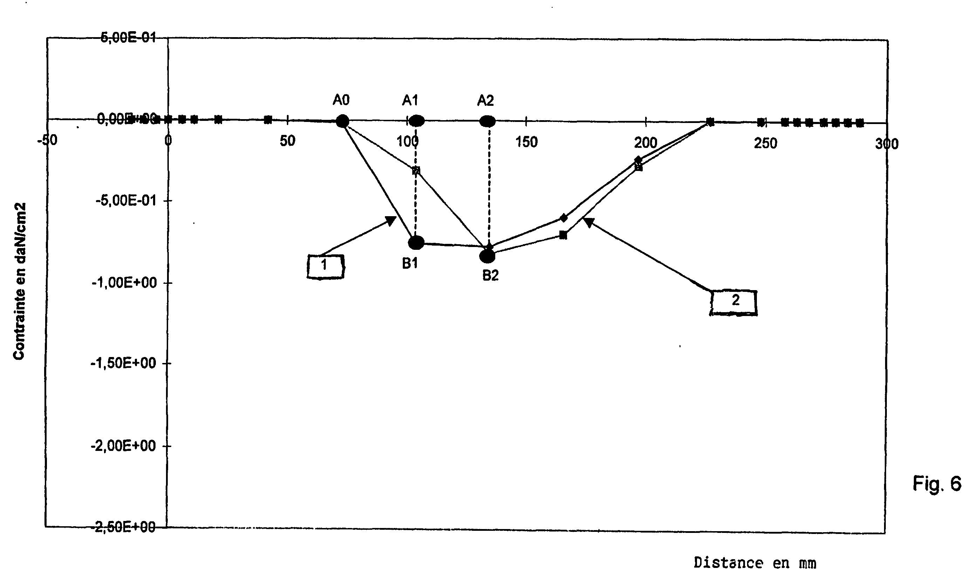

La figure 6 représente des signaux représentatifs des contraintes de cisaillement longitudinales (en daN/cm2), en fonction de la distance « D » (en mm) entre le bord de l'aire de contact et le point considéré, développées sous une nervure sacrifiée et sur un sol donné, d'une part dans le cas où un couple freineur est appliqué (courbe 1) et d'autre part en roulage libre (courbe 2). Les points B1 et B2 sont les points des courbes correspondant à une variation brusque de la pente de ces courbes. Cette variation brusque est représentative d'une perte d'adhérence (début de glissement) ou d'une reprise d'adhérence (fin du glissement). Le point A0 correspond au début de l'aire de contact. Sur la figure 6, on peut observer que le gradient moyen de la courbe 1 entre le point A0 et le point B1 est supérieur en valeur absolue au gradient de la courbe 2 entre les points A0 et B2. Ceci est à rapprocher du fait que la marge d'adhérence disponible dans le cas correspondant à la courbe 1 est inférieure à la marge d'adhérence disponible dans le cas correspondant à la courbe 2. Le rapport entre ledit gradient moyen et la valeur du signal au point caractéristique d'une perte d'adhérence (respectivement B1 et B2 sur les courbes 1 et 2) est un exemple d'indicateur de la marge d'adhérence disponible.

C'est pourquoi, dans une application particulière la méthode visant à produire une indication de la marge d'adhérence disponible, sans passer par une mesure ou une estimation des efforts, vertical et tangentiel, effectivement appliqués au pneumatique, l'invention propose que la fonction du signal soit le rapport entre la valeur moyenne de la dérivée première dudit signal par rapport au temps et la valeur du signal au point caractéristique d'une perte d'adhérence.

Selon un autre aspect, on peut observer que la longueur du segment A0-A1 est plus petite que celle du segment A0-A2, traduisant le fait que la marge d'adhérence disponible dans le cas de la courbe 1, correspondant au couple freineur, est plus faible que la marge d'adhérence disponible dans le cas de la courbe 2 correspondant au cas du roulage libre. Ainsi, à partir de la longueur de ces segments on dispose d'une autre information représentative de la marge d'adhérence disponible, ladite marge d'adhérence décroissant en même temps que la longueur desdits segments diminue.

C'est pourquoi, dans une application particulière la méthode visant à produire une indication de la marge d'adhérence disponible, sans passer par une mesure ou une estimation des efforts, vertical et tangentiel, effectivement appliqués au pneumatique, l'invention propose que la fonction du signal soit l'intervalle de temps séparant les détections.

Ainsi, à partir d'une analyse appropriée du signal de contrainte représenté en fonction de la distance parcourue, égale au produit de la vitesse par le temps écoulé depuis l'entrée en contact avec le sol du point où la mesure est effectuée, il est possible de retirer deux informations : une information représentative du potentiel d'adhérence entre le pneumatique et la chaussée, et une information relative au niveau de sollicitation (motrice, freineuse ou transversale) exercée sur le pneumatique, et permettant donc de connaître la marge d'adhérence disponible du pneumatique.

Il est possible d'utiliser de la même manière des mesures des déformations longitudinale et transversale de la nervure à la place des mesures de contraintes. Simplement, au cas où l'on désirerait calculer le coefficient de frottement, un étalonnage préalable entre les valeurs de déformations et de contraintes doit être réalisé et pris en compte dans le calcul.

Tout ce qui vient d'être décrit pour une nervure sacrifiée peut être appliqué au cas d'un pain sacrifié.

Pour certains pneumatiques, il peut être difficile de produire, sous la nervure sacrifiée, une contrainte de cisaillement suffisamment importante pour provoquer le glissement de celle-ci sur tout type de revêtement et dès le roulage libre du pneumatique, dans le cas où la nervure sacrifiée est réalisée dans le même matériau que les nervures adjacentes. Au cours de l'usure du pneumatique, la pression de contact verticale entre les nervures sacrifiées ou les pains sacrifiés et le sol risque de devenir très faible du fait d'une usure initiale plus rapide de ces nervures ou pains sacrifiés que celle des autres pains ou nervures du pneumatique. Ceci peut nuire à la précision de mesure des potentiels d'adhérence lorsque ces nervures ou pains sacrifiés ont atteint cet état d'usure où la pression de contact est très faible.

On sait que, en négligeant l'effet d'entaille dû aux sculptures, la pression exercée sur le sol dans l'aire de contact correspond sensiblement à la pression nominale de gonflage du pneumatique. Or, par sa nature, sous une nervure sacrifiée, on ne retrouve qu'une fraction de ladite pression de gonflage. Pour fixer les idées, il a été observé expérimentalement que les mesures proposées par la présente invention donnent des résultats fiables si l'on trouve sous la nervure sacrifiée (ou plus généralement du premier élément) une pression résiduelle de contact sur le sol valant de préférence au moins 30% à 40% (et avantageusement au moins 50%) de la pression nominale.

Or en roulage libre et par le phénomène d'usure du caoutchouc, il s'établit un équilibre tel que la vitesse d'usure des premier et deuxième éléments est identique, la différence de hauteur entre les premier et deuxième éléments étant alors constante. A cet équilibre, on peut constater une certaine pression résiduelle sous la nervure sacrifiée. Lorsque cette pression résiduelle est trop faible (par exemple 10% de la pression nominale), on ne peut procéder aux mesures dont il est question dans la présente demande, ou du moins de telles mesures ne sont pas fiables car pas représentatives de l'adhérence prévalent sous les éléments ordinaires (c'est à dire non sacrifiés) de la bande de roulement. C'est pourquoi il est proposé d'utiliser pour la nervure sacrifiée un matériau modifié, de façon à ce que la pression résiduelle soit suffisamment importante. On a vérifié expérimentalement que les conditions de mesure sont bien meilleures et que les résultats sont suffisamment représentatifs des conditions d'adhérence prévalent pour les matériaux non modifiés.

Ainsi, dans un aspect de la présente invention, ledit premier élément (voir nervure 1 à la figure 1) est réalisé dans un matériau différent du matériau dans lequel est réalisé ledit deuxième élément, conférant audit premier élément une meilleure résistance à l'usure que la résistance à l'usure dudit deuxième élément. De la sorte, malgré le fait que, par la nature de l'invention, ledit premier élément se trouve sollicité d'une façon préjudiciable à sa longévité, ledit premier élément est maintenu dans des conditions aptes à l'estimation du potentiel d'adhérence ou de la marge d'adhérence.

Une première variante d'un pneumatique selon l'invention concerne un pneumatique dans lequel ledit premier élément (voir nervure 1 à la figure 1) est réalisé dans un matériau différent du matériau dans lequel est réalisé ledit deuxième élément, conférant audit premier élément un potentiel d'adhérence inférieur à celui dudit deuxième élément. Cela a pour avantage de diminuer les contraintes tangentielles nécessaires pour provoquer le glissement de la nervure sacrifiée.

On peut par exemple, au stade de la fabrication du pneumatique, réaliser une bande de roulement par coextrusion à partir des différents caoutchoucs crus convenables. L'intérêt de cet aspect est de permettre à ces éléments sacrifiés de glisser, sur un sol donné, pour des sollicitations de cisaillement plus faibles que celles qui seraient nécessaires si ces éléments étaient constitués du même matériau que celui des autres pains ou nervures du pneumatique. La vitesse d'usure d'un élément de gomme décroissant très rapidement lorsqu'on diminue la contrainte de cisaillement s'exerçant dans l'aire de contact entre cet élément et le sol, lorsque cet élément glisse sur le sol, la conséquence de cette amélioration est que les nervures ou pains sacrifiés réalisés dans ce matériau moins adhérent s'useront moins vite, et que la pression de contact verticale entre ces nervures ou pains sacrifiés et le sol diminuera également moins vite au cours de l'usure du pneumatique.

Une autre variante d'un pneumatique selon l'invention concerne un pneumatique dans lequel ledit premier élément est réalisé dans un matériau de plus haut module de Young que le module de Young du matériau dans lequel est réalisé ledit deuxième élément. Cela a pour conséquence d'accroître les contraintes tangentielles à l'origine du glissement. On peut combiner cette disposition avec la précédente.

C'est également pourquoi il est aussi proposé, dans une autre variante de réalisation avantageuse, de réaliser lesdites nervures ou pains sacrifiés dans un matériau présentant une meilleure résistance à l'usure que les matériaux constituant les autres nervures ou pains de sculpture du pneumatique. L'intérêt de cet aspect est là encore de diminuer la vitesse d'usure de ces nervures ou pains sacrifiés avec, pour conséquence, une diminution moins rapide de la pression de contact verticale entre les nervures ou pains sacrifiés au cours de l'usure du pneumatique.

Ces trois variantes peuvent être avantageusement combinées. Il est ainsi possible de maintenir, pendant toute la durée de vie du pneumatique, une pression de contact verticale suffisante, entre les nervures ou pains sacrifiés et le sol, pour garantir une bonne précision de la mesure des potentiels d'adhérence.

Le potentiel d'adhérence du pneumatique sur la chaussée conditionne directement le niveau maximal des efforts de guidage, de freinage et de motricité qui peuvent être transmis au véhicule. Il est un élément déterminant de la mobilité et de la tenue de route des véhicules.

Des études statistiques menées dans plusieurs pays montrent qu'il existe une relation indéniable entre ce potentiel d'adhérence et le risque d'accidents sur chaussée mouillée : plus le niveau du potentiel d'adhérence sur chaussée mouillée est faible et plus le risque d'accident est élevé. La sécurité des usagers dépend donc étroitement du potentiel d'adhérence.

Un enjeu important pour la sécurité est de pouvoir évaluer le niveau du potentiel d'adhérence du pneumatique le plus tôt possible avant d'atteindre la limite d'adhérence, car la possibilité d'éviter un accident en cas d'une adhérence insuffisante sera d'autant plus grande que les actions pour adapter les conditions de roulage du véhicule seront réalisées tôt.

Le principe de conception du pneumatique présenté ici représente un intérêt important de ce point de vue. En effet, il permet d'évaluer le niveau du potentiel d'adhérence même lorsque le pneumatique est en roulage libre, ce qui revient à dire qu'il est possible de déterminer ce potentiel dans toutes les conditions de roulage du véhicule, depuis la situation de roulage en ligne droite à vitesse constante jusqu'aux situations de freinage et d'accélération maximaux, ou de virages pris à la limite d'adhérence. Le potentiel d'adhérence disponible peut ainsi être évalué en permanence.

A partir des mêmes mesures, il est également possible de connaître la part du potentiel d'adhérence effectivement utilisée.
Le tableau suivant illustre des applications permises par la connaissance de ces informations.

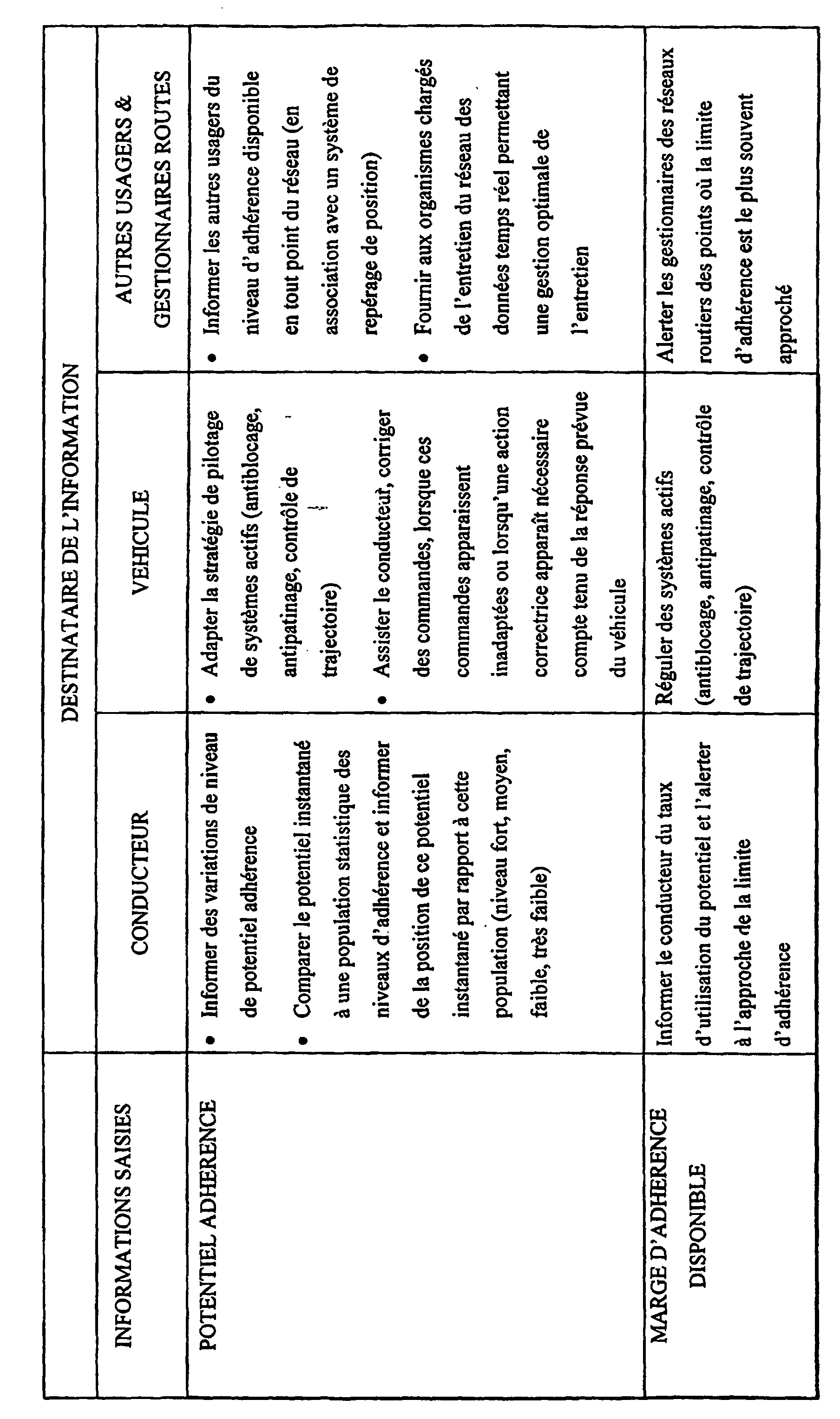

A partir de la seule connaissance du potentiel d'adhérence disponible, ou d'une information directement corrélée au potentiel d'adhérence, il est possible :
- d'informer le conducteur du véhicule :
   ⇒ lorsque des variations du niveau d'adhérence surviennent : par exemple, si le potentiel diminue, au delà d'un certain niveau de variation, une alerte peut être délivrée au conducteur sous une forme sonore ou visuelle pour l'inciter à adapter sa conduite et à accroître sa vigilance ;
   ⇒ sur le niveau relatif d'adhérence dont il dispose à un instant donné en comparaison à une base statistique des niveaux d'adhérence rencontrés : l'information prélevée en continu, lorsque le véhicule roule, peut alimenter une base de données implantée dans un système informatique lié au véhicule ou extérieur au véhicule (base de données centralisée avec laquelle le véhicule communiquerait) ; de plus, cette information peut être comparée à la population statistique déjà stockée dans la base de données pour déterminer à quel percentile de la population elle correspond ; ce résultat peut être converti en une information simple délivrée au conducteur (par exemple par l'indication d'un niveau conventionnel qualifiant l'adhérence disponible : fort, moyen, faible, très faible) ;
- d'agir sur le véhicule :
   ⇒ en adaptant la stratégie de pilotage de systèmes du véhicule tels que les systèmes d'antiblocage de roues, d'antipatinage et de contrôle actif de trajectoire : ces systèmes pourraient disposer de stratégies différentes selon le niveau d'adhérence et prédéfinies par construction ; en fonction du niveau instantané d'adhérence, la stratégie de pilotage la plus adaptée pourrait être mise en ceuvre ;
   ⇒ en permettant la détermination des commandes optimales à appliquer à un organe du véhicule : des simulations numériques en temps réel peuvent maintenant être réalisées dans les véhicules ; connaissant le niveau d'adhérence, il est possible de rechercher la commande à appliquer à un organe (frein par exemple) pour que la réponse soit optimale ; il est aussi possible de prédire par simulation quelle sera la réponse du véhicule aux commandes exercées par le conducteur et de corriger en conséquence ses commandes ou de l'assister dans le cas où les commandes apparaîtraient inadaptées ;
- d'informer les autres usagers de la route et les organismes chargés de la gestion du réseau routier, en communiquant ces informations à des bases centrales de données ; les moyens actuels de communication et de localisation des mobiles (système GPS par exemple) permettent d'associer à chaque information sur le potentiel d'adhérence fournie par un véhicule la localisation précise de la portion routière correspondante et de transmettre ces informations à un système centralisé ; partant de ces informations, il est possible :
   ⇒ d'informer les autres usagers de la route, et leurs véhicules, du niveau disponible en un point donné avant même qu'ils n'aient atteint ce point, ce qui permet d'anticiper encore plus les actions correctives éventuellement nécessaires au niveau des commandes des véhicules ;
   ⇒ de fournir aux gestionnaires du réseau routier des informations statistiques précises et en temps réel sur le niveau d'adhérence, rendant ainsi inutiles les opérations régulières de mesure de l'adhérence réalisées dans certains pays pour surveiller leur réseau routier.

Si cette information sur le potentiel d'adhérence disponible est complétée de l'information sur le niveau d'adhérence effectivement utilisé, il est possible en plus :
- d'informer le conducteur sur le taux d'utilisation de ce potentiel disponible et de l'alerter à l'approche de la limite d'adhérence ;
- de réguler des systèmes du véhicule (systèmes antiblocage de roues ou antipatinage, par exemple) directement à partir de la différence entre le potentiel disponible et le potentiel utilisé ;
- de fournir aux personnes en charge de la gestion du réseau routier des informations statistiques permettant de détecter les points du réseau où la limite d'adhérence est le plus souvent approchée et où le risque d'accident peut être important de ce fait, avant même que ce risque ne se soit exprimé au travers des statistiques d'accidents.

On peut par exemple procéder à une mesure comme expliqué par le brevet DE 3937966 A1. Par exemple, un élément magnétique peut être incorporé dans un pain ou une nervure sacrifiée, à un endroit tel que cet élément subisse un déplacement relatif par rapport à des capteurs à effet Hall placés dans le pneumatique lorsque ledit pain ou nervure sacrifiée est soumis à un effort tangentiel ou à un effort normal. Les capteurs à effet Hall sont disposés de façon à mesurer le déplacement de l'élément magnétique au minimum sous l'effet d'un effort tangentiel appliqué à la surface du pain ou de la nervure sacrifiée, voire à mesurer en plus son déplacement, de façon distincte, sous l'effet d'un effort normal appliqué à ce pain ou cette nervure sacrifiée.

En variante, on pourrait aussi effectuer une mesure comme enseigné par le brevet US 5 864 056 ou US 5 502 433. ,

Les signaux ainsi mesurés sont envoyés à une unité de calcul qui détermine le potentiel d'adhérence et la marge d'adhérence disponible selon l'une des méthodes proposées. Notons que la technologie actuelle permet la transmission, de préférence la télétransmission de signaux depuis une ou plusieurs unités de mesure implantées dans la bande de roulement et le véhicule proprement dit, que ce n'est pas l'objet de cette invention que de traiter de cet aspect, qui est relativement indépendant des aspects de mesures qui sont traités ici.

Ces informations calculées sont adressées elles-mêmes, par exemple à un dispositif permettant d'informer le conducteur, ou bien sont envoyées, par exemple par voie hertzienne, à un système extérieur au véhicule, permettant de centraliser les informations relatives au potentiel d'adhérence du sol et destiné à informer tous les usagers de la route, ou bien encore sont utilisées pour réguler des systèmes ou des organes du véhicule sur lequel le pneumatique est monté.

## Revendications

1. Pneumatique dont la bande de roulement comporte un premier élément (1) de la bande de roulement ayant une surface de contact avec le sol positionnée à une distance de l'axe de roue Rs plus faible que celle Ra d'au moins un deuxième élément (2), lesdits éléments étant tels que, en fonctionnement normal, les surfaces des deux éléments entrent en contact avec le sol dans l'aire de contact et étant tels que, dans au moins une plage de conditions de roulement à surveiller, la différence entre les distances Ra et Rs puisse s'auto-entretenir au cours de l'usure du pneu en service normal, de sorte que, en fonctionnement normal, la surface de contact du premier élément subisse un glissement par rapport au sol au cours de son passage dans l'aire de contact alors que la surface de contact du deuxième élément ne glisse pas sur le sol, ledit pneumatique comportant des moyens formant capteur à l'intérieur dudit premier élément (1), les moyens formant capteur étant capables de mesurer les déformations ou les contraintes au moins dans le sens tangentiel dans ladite surface de contact dudit premier élément au cours de son passage dans l'aire de contact.

2. Pneumatique selon la revendication 1, dans lequel ledit premier élément (1) est réalisé dans un matériau différent du matériau dans lequel est réalisé ledit deuxième élément (2), conférant audit premier élément un potentiel d'adhérence inférieur à celui dudit deuxième élément.

3. Pneumatique selon la revendication 1, dans lequel ledit premier élément (1) étant réalisé dans un matériau différent du matériau dans lequel est réalisé ledit deuxième élément (2), conférant audit premier élément une meilleure résistance à l'usure que la résistance à l'usure dudit deuxième élément.

4. Pneumatique selon la revendication 1, dans lequel ledit premier élément (1) est réalisé dans un matériau de plus haut module de Young que le module de Young du matériau dans lequel est réalisé ledit deuxième élément (2).

5. Méthode de détection d'une caractéristique d'adhérence entre une roue possédant une bande de roulement déformable et un sol de roulement, comprenant les étapes suivantes :
a) Prévoir au moins un premier élément (1) de contact de la bande de roulement ayant une surface de contact avec le sol positionnée à une distance de l'axe de roue plus faible que la distance d'une surface de contact d'au moins un deuxième élément (2) avec le sol, l'écart entre lesdites surfaces de contact étant tel qu'en fonctionnement normal les surfaces des deux éléments entrent en contact toutes deux avec le sol et que, dans au moins une plage de conditions de roulement à surveiller, la surface de contact du premier élément subisse un glissement par rapport au sol au cours de son passage dans l'aire de contact alors que la surface de contact du deuxième élément ne glisse pas sur le sol ;
b) Produire un premier signal, représentatif d'un effort tangentiel dans ladite surface de contact de l'élément le plus proche de l'axe ;
c) Détecter une variation dudit premier signal, caractéristique d'une perte d'adhérence ;
d) Produire une estimation du potentiel de frottement dans ladite surface de contact dudit premier élément ;
e) Produire une estimation du potentiel d'adhérence du pneumatique.

6. Méthode de détection selon la revendication 5 dans laquelle les étapes visant à détecter une variation dudit premier signal et à produire une estimation du potentiel d'adhérence du pneumatique comprennent les opérations suivantes :
a) Produire un deuxième signal, représentatif d'un effort vertical dans ladite surface de contact dudit premier élément ;
b) Produire à partir des premier et deuxième signaux un troisième signal, représentatif du rapport entre l'effort tangentiel et l'effort vertical ;
c) Détecter une variation dudit troisième signal caractéristique d'une perte d'adhérence ;
d) Produire une estimation du potentiel de frottement dans ladite surface de contact du premier élément ; et
e) A partir du potentiel de frottement, produire une estimation du potentiel d'adhérence dudit pneumatique.

7. Méthode selon l'une des revendications 5 ou 6, comprenant en outre les étapes suivantes :
f) Produire un premier signal de bande de roulement fonctionnelle, représentatif d'un effort tangentiel dans une zone de la surface de contact dudit au moins un deuxième élément ;
g) Produire un deuxième signal de bande de roulement fonctionnelle, représentatif d'un effort vertical dans une zone de la surface de contact dudit au moins un deuxième élément ;
h) Produire une indication caractéristique de l'effort tangentiel appliqué au pneumatique, à partir de l'intégration dudit premier signal de bande de roulement fonctionnelle, entre les instants de début et de fin de contact avec le sol de ladite zone, et sur toute la largeur du pneumatique ;
i) Produire une indication caractéristique de l'effort vertical appliqué au pneumatique, à partir de l'intégration dudit deuxième signal de bande de roulement fonctionnelle, entre les instants de début et de fin de contact avec le sol de ladite zone, et sur toute la largeur du pneumatique ;
j) Déterminer la "marge d'adhérence disponible" par la différence entre le potentiel d'adhérence du pneumatique et le rapport entre lesdits effort tangentiel et effort vertical appliqués au pneumatique.

8. Méthode de détection d'une caractéristique d'adhérence entre une roue possédant une bande de roulement déformable et un sol de roulement, comprenant les étapes suivantes :
a) Prévoir au moins un premier élément de contact de la bande de roulement ayant une surface de contact avec le sol positionnée à une distance de l'axe de roue plus faible que la distance d'une surface de contact d'au moins un deuxième élément (2) avec le sol, l'écart entre lesdites surfaces de contact étant tel qu'en fonctionnement normal les surfaces des deux éléments entrent en contact toutes deux avec le sol dans au moins une plage de conditions de roulement à surveiller, la surface de contact du premier élément subissant un glissement par rapport au sol au cours de son passage dans l'aire de contact alors que la surface de contact du deuxième élément ne glisse pas sur le sol ;
b) Produire un premier signal représentatif d'un effort tangentiel dans une zone de la surface de contact dudit premier élément ;
c) Détecter sur ledit premier signal l'instant d'entrée dans l'aire de contact dudit premier élément ;
d) Détecter sur ledit premier signal l'instant où le premier signal subit une variation caractéristique d'une perte d'adhérence ; et
e) Produire une indication caractéristique d'une marge d'adhérence disponible à partir d'une fonction du premier signal entre l'instant de détection de l'entrée dans l'aire de contact et l'instant de détection de ladite variation caractéristique.

9. Méthode de détection selon la revendication 8 dans laquelle ladite fonction du premier signal est le rapport entre la valeur moyenne de la dérivée première dudit signal par rapport au temps et la valeur du signal au point caractéristique d'une perte d'adhérence.

10. Méthode de détection selon la revendication 8 dans laquelle ladite fonction du premier signal est l'intervalle de temps séparant lesdites détections.

## Patentansprüche

1. Luftreifen, dessen Lauffläche ein erstes Laufflächenelement (1) aufweist, das eine Kontaktfläche mit dem Boden aufweist, die in einer Entfernung Rs zur Radachse positioniert ist, die geringer ist als diejenige Ra mindestens eines zweiten Elements (2), wobei die Elemente derart sind, dass im Normalbetrieb die Flächen der beiden Elemente im Kontaktbereich mit dem Boden in Kontakt kommen, und derart sind, dass zumindest in einem Bereich von zu überwachenden Fahrbedingungen der Unterschied zwischen den Entfernungen Ra und Rs sich während der Abnutzung des Luftreifens im Normalbetrieb selbst aufrechterhalten kann, so dass im Normalbetrieb die Kontaktfläche des ersten Elements während ihres Durchgangs durch den Kontaktbereich ein Gleiten bezüglich des Bodens erfährt, während die Kontaktfläche des zweiten Elements nicht auf dem Boden gleitet, wobei der Luftreifen einen Sensor bildende Mittel im Inneren des ersten Elements (1) aufweist, wobei die einen Sensor bildenden Mittel in der Lage sind, die Verformungen oder die Beanspruchungen in der Kontaktfläche des ersten Elements während ihres Durchgangs durch den Kontaktbereich zumindest in tangentialer Richtung zu messen.

2. Luftreifen nach Anspruch 1, bei dem das erste Element (1) aus einem anderen Material als das zweite Element (2) hergestellt ist, sodaß das erste Element ein geringeres Haftvermögen als dasjenige des zweiten Elements besitzt.

3. Luftreifen nach Anspruch 1, bei dem das erste Element (1) aus einem anderen Material als das zweite Element (2) hergestellt ist, sodaß das erste Element eine bessere Abnutzungsfestigkeit als die Abnutzungsfestigkeit des zweiten Elements besitzt.

4. Luftreifen nach Anspruch 1, bei dem das erste Element (1) aus einem Material mit einem höheren Young-Modul hergestellt ist als der Young-Modul des Materials, aus dem das zweite Element (2) hergestellt ist.

5. Verfahren zur Erfassung einer Hafteigenschaft zwischen einem Rad, das eine verformbare Lauffläche aufweist, und einem Fahruntergrund, das die folgenden Schritte aufweist:
a) Vorsehen mindestens eines ersten Kontaktelements (1) der Lauffläche, das eine Kontaktfläche mit dem Boden aufweist, die in einer geringeren Entfernung zur Radachse angeordnet ist als die Entfernung einer Kontaktfläche mit dem Boden mindestens eines zweiten Elements, wobei der Abstand zwischen den Kontaktflächen derart ist, dass bei Normalbetrieb die Flächen der beiden Elemente beide mit dem Boden in Kontakt kommen, und dass zumindest in einem Bereich von zu überwachenden Fahrbedingungen die Kontaktfläche des ersten Elements während ihres Durchgangs durch den Kontaktbereich ein Gleiten bezüglich des Bodens erfährt, während die Kontaktfläche des zweiten Elements nicht auf dem Boden gleitet;
b) Erzeugen eines ersten Signals, das für eine tangentiale Kraft in der Kontaktfläche des der Achse am nächsten liegenden Elements repräsentativ ist;
c) Erfassen einer Veränderung des ersten Signals, die für einen Haftverlust charakteristisch ist;
d) Erzeugen einer Schätzung des Reibungspotentials in der Kontaktfläche des ersten Elements;
e) Erzeugen einer Schätzung des Haftvermögens des Luftreifens.

6. Erfassungsverfahren nach Anspruch 5, bei dem die Schritte zur Erfassung einer Veränderung des ersten Signals und zur Erzeugung einer Schätzung des Haftvermögens des Luftreifens die folgenden Arbeitsgänge aufweisen:
a) Erzeugen eines zweiten Signals, das für eine senkrechte Kraft in der Kontaktfläche des ersten Elements repräsentativ ist;
b) Erzeugen, ausgehend von dem ersten und dem zweiten Signal, eines dritten Signals, das für das Verhältnis zwischen der tangentialen Kraft und der senkrechten Kraft repräsentativ ist;
c) Erfassen einer Veränderung des dritten Signals, die für einen Haftverlust charakteristisch ist;
d) Erzeugen einer Schätzung des Reibungspotentials in der Kontaktfläche des ersten Elements; und
e) ausgehend vom Reibungspotential, Erzeugen einer Schätzung des Haftvermögens des Luftreifens.

7. Verfahren nach einem der Ansprüche 5 oder 6, das weiter die folgenden Schritte aufweist:
f) Erzeugen eines ersten Signals einer funktionalen Lauffläche, das für eine tangentiale Kraft in einer Zone der Kontaktfläche des mindestens einen zweiten Elements repräsentativ ist;
g) Erzeugen eines zweiten Signals einer funktionalen Lauffläche, das für eine senkrechte Kraft in einer Zone der Kontaktfläche des mindestens einen zweiten Elements repräsentativ ist;
h) Erzeugen einer für die auf den Luftreifen ausgeübte tangentiale Kraft charakteristischen Anzeige ausgehend von der Integration des ersten Signals einer funktionalen Lauffläche zwischen den Anfangs- und Endzeitpunkten des Kontakts der Zone mit dem Boden über die ganze Breite des Luftreifens;
i) Erzeugen einer für die auf den Luftreifen ausgeübte senkrechte Kraft charakteristischen Anzeige ausgehend von der Integration des zweiten Signals einer funktionalen Lauffläche zwischen den Anfangs- und Endzeitpunkten des Kontakts der Zone mit dem Boden über die ganze Breite des Luftreifens;
j) Bestimmen des "verfügbaren Haftspielraums" durch die Differenz zwischen dem Haftvermögen des Luftreifens und dem Verhältnis zwischen den auf den Luftreifen ausgeübten tangentialen und senkrechten Kräften.

8. Verfahren zur Erfassung einer Hafteigenschaft zwischen einem Rad, das eine verformbare Lauffläche besitzt, und einem Fahruntergrund, das die folgenden Schritte aufweist:
a) Vorsehen mindestens eines ersten Kontaktelements der Lauffläche, das eine Kontaktfläche mit dem Boden aufweist, die in einer geringeren Entfernung zur Radachse angeordnet ist als die Entfernung einer Kontaktfläche mit dem Boden mindestens eines zweiten Elements (2), wobei der Abstand zwischen den Kontaktflächen derart ist, dass bei Normalbetrieb die Flächen der beiden Elemente in mindestens einem Bereich von zu überwachenden Fahrbedingungen beide mit dem Boden in Kontakt kommen, wobei die Kontaktfläche des ersten Elements während ihres Durchgangs durch den Kontaktbereich ein Gleiten bezüglich des Bodens erfährt, während die Kontaktfläche des zweiten Elements nicht auf dem Boden gleitet;
b) Erzeugen eines ersten Signals, das für eine tangentiale Kraft in einer Zone der Kontaktfläche des ersten Elements repräsentativ ist;
c) Erfassen im ersten Signal des Eintrittsmoments des ersten Elements in den Kontaktbereich;
d) Erfassen im ersten Signal des Moments, in dem das erste Signal eine für einen Haftverlust charakteristische Änderung erfährt; und
e) Erzeugen einer charakteristischen Anzeige eines verfügbaren Haftspielraums, ausgehend von einer Funktion des ersten Signals zwischen dem Zeitpunkt der Erfassung des Eintritts in den Kontaktbereich und dem Zeitpunkt der Erfassung der charakteristischen Veränderung.

9. Erfassungsverfahren nach Anspruch 8, bei dem die Funktion des ersten Signals das Verhältnis zwischen dem mittleren Wert der ersten Ableitung des Signals bezüglich der Zeit und dem Wert des Signals am charakteristischen Punkt eines Haftverlusts ist.

10. Erfassungsverfahren nach Anspruch 8, bei dem die Funktion des ersten Signals der die Erfassungen trennende Zeitraum ist.

## Claims

1. Tyre whose tread comprises a first tread element (1) having a contact surface with the ground located a distance from the wheel axle Rs smaller than that Ra of at least one second element (2), the said elements being such that, during normal operation, the surfaces of the two elements come into contact with the ground in the contact area and being such that, at least within a range of rolling conditions to be monitored, the difference between the distances Ra and Rs can be maintained automatically during the process of tyre wear in normal service, so that in normal service the contact surface of the first element slides relative to the ground during its passage through the contact area while the surface of the second element does not slide over the ground, the said tyre comprising means that constitute a sensor within the said first element (1), the said means constituting a sensor being able to measure the deformations or stresses at least in the tangential direction in the said contact surface of the said first element during its passage through the contact area.

2. Tyre according to Claim 1, in which the said first element (1) is made of a material different from that used to make the said second element (2), which confers on the said first element a grip potential lower than that of the said second element.

3. Tyre according to Claim 1, in which the said first element (1) is made of a material different from the material used to make the said second element (2), which confers on the said first element a wear resistance better than that of the said second element.

4. Tyre according to Claim 1, in which the said first element (1) is made of a material having a Young's modulus higher than the Young's modulus of the material used to make the said second element (2).

5. Method for the detection of a grip characteristic between a wheel with a deformable tread and a surface over which it is rolling, comprising the following stages:
a) Provision of at least a first contact element (1) of the tread having a contact surface with the ground, positioned a distance from the wheel axle smaller than the distance of a ground contact surface of at least one second element (2), the offset between the said contact surfaces being such that during normal operation the surfaces of the two elements both come into contact with the ground and, at least within a range of rolling conditions to be monitored, the contact surface of the first element slides relative to the ground during its passage through the contact area while the contact surface of the second element does not slide over the ground;
b) Production of a first signal that represents a tangential force in the said contact surface of the element nearest the axle;
c) Detection of a variation of the said first signal, that characterises a loss of grip;
d) Production of an estimate of the friction potential in the said contact surface of the said first element;
e) Production of an estimate of the tyre's grip potential.

6. Detection method according to Claim 5, in which the stages intended to detect a variation of the said first signal and to produce an estimate of the tyre's grip potential comprises the following operations:
a) Production of a second signal representing a vertical force in the said contact surface of the said first element;
b) Production from the first and second signals of a third signal representing the ratio between the tangential and vertical forces;
c) Detection of a variation of the said third signal that characterises a loss of grip;
d) Production of an estimate of the friction potential in the said contact surface of the first element; and
e) From the friction potential, production of an estimate of the said tyre's grip potential.

7. Method according to either of Claims 5 or 6, which comprises in addition the following stages;
f) Production of a first operational tread signal representing a tangential force in a zone of the contact surface of the said at least one second element;
g) Production of a second operational tread signal representing a vertical force in a zone of the contact surface of the said at least one second element;
h) Production of an indication that characterises the tangential force applied to the tyre, based on integration of the said first operational tread signal between the instants when the contact of the said zone with the ground begins and ends, and across the full width of the tyre;
i) Production of an indication that characterises the vertical force applied to the tyre, based on integration of the said second operational tread signal between the instants when the contact of the said zone begins and ends, and across the full width of the tyre;
j) Determination of the "available grip margin" as the difference between the tyre's grip potential and the ratio between the said tangential and vertical forces applied to the tyre.

8. Method for detecting a grip characteristic between a wheel with a deformable tread and a surface over which it is rolling, comprising the following stages:
a) Provision of at least a first contact element of the tread having a contact surface with the ground, positioned a distance from the wheel axle smaller than the distance of a ground contact surface of at least one second element (2), the offset between the said contact surfaces being such that during normal operation the surfaces of the two elements both come into contact with the ground at least in a range of rolling conditions to be monitored, the contact surface of the first element sliding relative to the ground during its passage through the contact area while the contact surface of the second element does not slide over the ground;
b) Production of a first signal representing a tangential force in the zone of the contact surface of the said first element;
c) Detection in the said first signal of the instant when the said first element enters the contact area;
d) Detection in the said first signal of the instant when the first signal undergoes a variation that characterises a loss of grip; and
e) Production of an indication that characterises an available grip margin, from a function of the first signal between the instant when entry into the contact area is detected and the instant when the said characteristic variation is detected.

9. Detection method according to Claim 8, in which the said function of the first signal is the ratio between the mean value of the first derivative of the said signal relative to the time and value of the signal at the point that characterises a loss of grip.

10. Detection method according to Claim 8, in which the said function of the first signal is the time interval separating the said detections.
